# FASCICULE DE BREVET EUROPEEN

(11) **EP 3 934 108 B1**
(45) Date de publication et mention de la délivrance du brevet: **31.05.2023**
(21) Numéro de dépôt: 21181337.3
(22) Date de dépôt: 24.06.2021
(51) Int. Cl.: H04B 3/54

(54) **PROCÉDÉ DE DÉTERMINATION D'UN MODE DE COMMUNICATION ENTRE DEUX DISPOSITIFS VOISINS D'UN RÉSEAU**
VERFAHREN ZUR BESTIMMUNG EINES KOMMUNIKATIONSMODUS ZWISCHEN ZWEI BENACHBARTEN GERÄTEN IN EINEM NETZWERK
METHOD FOR DETERMINING A MODE FOR COMMUNICATION BETWEEN TWO NEIGHBOURING DEVICES OF A NETWORK

(30) Priorité: 01.07.2020 FR 2006948
(43) Date de publication de la demande: 05.01.2022
(73) Titulaire: Sagemcom Energy & Telecom SAS, 92500 Rueil-Malmaison (FR)
(72) Inventeur: BAROIS, Jérôme, 92500 RUEIL MALMAISON (FR); TERRIEN, Clément, 92500 RUEIL MALMAISON (FR); BARTHES, Julien, 92500 RUEIL MALMAISON (FR)
(74) Mandataire: Cabinet Le Guen Maillet

(56) Documents cités:
- US-A1- 2012 201 155
- US-A1- 2013 101 055

## Description

### DOMAINE TECHNIQUE

Au moins un mode de réalisation de la présente invention concerne un procédé de transmission d'un message à partir d'un premier dispositif noeud vers un second dispositif noeud appartenant à un voisinage réseau du premier dispositif noeud, lesdits premier et second dispositifs noeuds appartenant à un réseau utilisant des communications par courants porteurs en ligne. Au moins un mode de réalisation de la présente invention concerne un dispositif mettant en oeuvre le procédé.

### ETAT DE LA TECHNIQUE ANTERIEURE

Les communications par courants porteurs en ligne PLC (sigle signifiant « PowerLine Communications », en anglais) se développent, notamment dans le cadre des réseaux d'alimentation électrique de type AMM (sigle signifiant « Automated Meter Management », en anglais). Des réseaux de communication sont ainsi implémentés dans des réseaux d'alimentation électrique pour la collecte automatisée par un dispositif noeud de base (aussi appelé « concentrateur de données ») du réseau, auprès de compteurs électriques intelligents (« smart electricity meters » en anglais), de données de relevés de consommation énergétique que lesdits compteurs électriques intelligents sont respectivement en charge de surveiller.

La norme de communication G3-PLC est définie pour permettre aux différents dispositifs noeuds (notamment concentrateur de données et compteurs électriques intelligents) d'un tel réseau de communiquer entre eux. La norme est spécifiée dans la recommandation ITU-T G.9903 laquelle décrit notamment la couche physique (PHY) et la couche liaison de données (DLL, sigle de « Data Link Layer », en anglais) du modèle OSI (acronyme de « Open Systems Interconnection », en anglais). La norme G3-PLC est destinée à être exploitée dans des bandes fréquentielles allant de 10 à 490 kHz. Elle supporte plus particulièrement les bandes fréquentielles suivantes : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Ces différentes bandes fréquentielles présentent des caractéristiques différentes en termes de débit, de portée, et de résistance aux perturbateurs, notamment.

Toutefois, la norme G3-PLC ne permet l'utilisation que d'une seule desdites bandes fréquentielles pour un dispositif noeud donné. Plus exactement, les dispositifs noeuds récents peuvent parfois supporter plusieurs bandes fréquentielles, mais pas en même temps. Une reconfiguration est alors nécessaire pour passer d'une première bande fréquentielle à une seconde bande fréquentielle. Ainsi, lorsque dans un réseau de communication il est nécessaire de reconfigurer, dans une nouvelle bande fréquentielle, un ensemble de dispositifs concentrateurs de données et un ensemble de compteurs électriques qui lui sont associés, une reconfiguration peut se montrer particulièrement complexe. Par exemple, un dispositif compteur n'ayant pas pu réceptionner un message lui indiquant de changer de bande fréquentielle peut devenir incapable de communiquer avec le dispositif concentrateur de données auquel il est associé, après que ce dernier ait pu, quant à lui, changer de bande fréquentielle.

Or, les besoins en termes de ressources des réseaux de communication, notamment dans le déploiement des réseaux d'alimentation électrique de type AMM, grandissent de jour en jour. La bande fréquentielle pour laquelle les éléments constitutifs d'un réseau ont été certifiés peut se retrouver en limite de capacité, ce qui fait obstacle à une augmentation du nombre d'échanges dans le réseau, par exemple pour introduire de nouvelles fonctionnalités ou encore de nouveaux besoins applicatifs, par exemple.

Le document US 2012/201155 A1 décrit des systèmes et des méthodes pour la sélection de canaux dans les communications par courants porteurs en ligne.

Le document US 2013/101055 A1 décrit des systèmes et des méthodes de routage de protocoles pour les communications par courants porteurs en ligne pouvant inclure la sélection d'une ou plusieurs sous-bandes de transmission sur lesquelles transmettre des trames.

Il est souhaitable de pallier ces différents inconvénients de l'état de la technique. Il est ainsi notamment souhaitable de proposer une solution de communication par courant porteur en ligne permettant d'augmenter la capacité de nombre d'échanges dans le réseau de communication. Il est notamment souhaitable de proposer une solution applicable aux réseaux d'alimentation électrique de type AMM.

### EXPOSE DE L'INVENTION

A cet effet, l'invention a pour objet un procédé de détermination d'un mode de transmission entre des premier et second dispositifs noeuds d'un réseau de communication par courants porteurs en ligne, le premier dispositif noeud étant situé dans le voisinage réseau du second dispositif noeud et vice-versa, le premier dispositif noeud étant configuré pour communiquer dans au moins deux bandes fréquentielles, et le second dispositif noeud étant configuré pour communiquer dans au moins une desdites au moins deux bandes fréquentielles, le procédé étant exécuté par le premier dispositif noeud, le procédé étant caractérisé en ce qu'il comprend :
- transmettre un exemplaire d'un premier message vers le second dispositif noeud dans chacune desdites au moins deux bandes fréquentielles, ledit premier message comprenant une information selon laquelle une estimation de canal est demandée au second dispositif noeud par ledit premier dispositif noeud,
- recevoir un second message émis par le second dispositif noeud sur chaque bande fréquentielle via laquelle le second dispositif noeud a reçu un dit exemplaire du premier message, chaque second message comprenant des informations représentatives d'une estimation de canal pour la bande fréquentielle via laquelle ledit second message est reçu,
- enregistrer, par le premier dispositif noeud, les informations représentatives de l'estimation de canal contenues dans chaque second message reçu, et
- déterminer, à partir des informations enregistrées, un mode de transmission d'un troisième message à émettre ultérieurement depuis le premier dispositif noeud vers le second dispositif noeud.

Avantageusement, il est ainsi possible d'exploiter plusieurs bandes fréquentielles simultanément. Les avantages découlant d'une utilisation simultanée de plusieurs bandes fréquentielles sont par exemple, une augmentation de la vitesse moyenne des transmissions entre deux noeuds voisins, et donc plus largement, à travers le réseau de communication, une répartition optimisée de la charge du réseau sur plusieurs bandes fréquentielles, et une meilleure communication en milieu perturbé. Ainsi, la capacité de nombre d'échanges dans le réseau est augmentée.

Le procédé selon l'invention peut également comporter les caractéristiques suivantes, considérées seules ou en combinaison :
- Le procédé comprend en outre une transmission d'un quatrième message, vers le second dispositif noeud, ce quatrième message comprenant une référence à une bande fréquentielle dite « étendue », la bande fréquentielle étendue comprend les au moins deux bandes fréquentielles, et le quatrième message comprend une information selon laquelle une estimation canal de la bande fréquentielle étendue est demandée au second dispositif noeud par ledit premier dispositif noeud.

Un traitement de plusieurs bandes fréquentielles visant à considérer que l'ensemble de ces bandes fréquentielles constitue une bande unique étendue permet de simplifier la gestion d'un réseau de communication exécutant le procédé décrit.
- La détermination du mode de transmission comprend une étape de comparaison de premiers indicateurs de qualité de transmission respectivement déterminés, pour chacune des bandes fréquentielles, à partir des informations enregistrées associées à chacune des au moins deux bandes fréquentielles.

Cela permet avantageusement de sélectionner une ou plusieurs bandes fréquentielles à utiliser en fonction du niveau de perturbation détecté pour chacune d'elles.
- La détermination d'un mode de transmission comprend en outre une sélection d'un mode de transmission dit « robuste » selon un niveau de qualité défini à partir d'une estimation d'un canal de transmission établi via une transmission multi-bandes dans lesdites au moins deux bandes fréquentielles. Il est entendu ici par les termes « mode de transmission robuste » un mode de transmission utilisant une modulation de type BPSK (de l'anglais Binary Phase Shift Keying) pour lequel chaque bit est répété plusieurs fois (quatre fois, ou six fois, par exemple).

Avantageusement, si un problème de performances est détecté dans une bande fréquentielle, il est possible d'utiliser un mode de communication plus robuste, quand bien même le débit de communication en est réduit pour cette bande fréquentielle.
- Les au moins deux bandes fréquentielles sont prises parmi le groupe : bande fréquentielle CENELEC A, bande fréquentielle CENELEC B, et, bande fréquentielle FCC ou bande fréquentielle ARIB.

Cela permet avantageusement d'implémenter le protocole selon l'invention dans un contexte de réseau de communication compatible avec la norme G3-PLC (ITU-T G9903) ou l'une de ses évolutions.
- L'information selon laquelle une estimation de canal est demandée au second dispositif noeud par le premier dispositif noeud est un indicateur *Tone Map Request* d'un entête de contrôle de trame défini selon la recommandation ITU-T G9903 et les informations représentatives d'au moins une estimation de canal, reçues depuis ledit second dispositif noeud sont comprises dans un message *Tone Map Response* défini selon la recommandation ITU-T G9903.

Un autre objet de l'invention est de proposer un dispositif noeud destiné à être utilisé dans un réseau de communication par courants porteurs en ligne, le dispositif noeud étant configuré pour communiquer avec un second dispositif noeud placé dans un même voisinage réseau dudit réseau de communication, le dispositif noeud comprenant :
- un module de transmission configuré pour transmettre vers le second dispositif noeud, dans au moins deux bandes fréquentielles, un premier message comprenant, dans chacune des au moins deux bandes fréquentielles, une information selon laquelle une estimation de canal est demandée au second dispositif noeud,
- un module de réception d'au moins un second message, émis depuis le second dispositif noeud et comprenant une ou plusieurs informations représentatives d'une estimation de canal d'une au moins des bandes fréquentielles, en réponse audit premier message,
- un module d'enregistrement configuré pour enregistrer dans une mémoire dudit dispositif noeud, la ou des informations représentatives d'au moins une estimation de canal, reçues depuis ledit second dispositif noeud,
- une unité de contrôle configurée pour déterminer, à partir de la ou des informations enregistrées dans ladite mémoire, un mode de transmission d'un troisième message à émettre depuis ledit dispositif noeud vers le second dispositif noeud.

L'invention a également pour objet un produit programme d'ordinateur comprenant des instructions de codes de programme pour exécuter les étapes du procédé précédemment décrit lorsque ce programme est exécuté par un processeur, ainsi qu'un support de stockage d'informations comprenant ce produit programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre un réseau d'alimentation électrique utilisant des communications par courants porteurs en ligne ;
[Fig. 2] illustre un premier échange protocolaire de messages entre deux dispositifs noeuds voisins du réseau déjà décrit sur la Fig. 1, selon un mode de réalisation ;
[Fig. 3] illustre un second échange protocolaire de messages entre deux dispositifs noeuds voisins du réseau déjà décrit sur la Fig. 1, selon un mode de réalisation ;
[Fig. 4] illustre un troisième échange protocolaire de messages entre deux dispositifs noeuds voisins du réseau déjà décrit sur la Fig. 1, selon un mode de réalisation ;
[Fig. 5] illustre un échange protocolaire de messages entre deux dispositifs noeuds voisins du réseau déjà décrit sur la Fig. 1, selon un mode de réalisation ;
[Fig. 6] est un ordinogramme représentant un procédé de détermination d'un mode de communication selon un mode de réalisation ; et,
[Fig. 7] est une représentation schématique de l'architecture d'un dispositif noeud configuré pour exécuter le procédé de détermination d'un mode de communication représenté sur la Fig. 6.

### EXPOSE DETAILLE DE MODES DE REALISATION

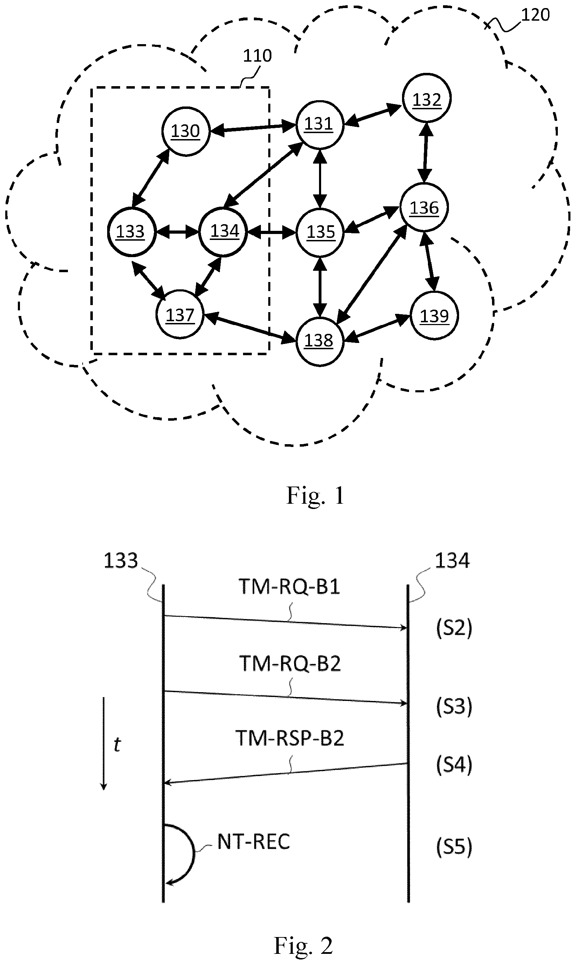

La **Fig. 1** illustre schématiquement un réseau de communication 120. Le réseau de communication 120 s'appuie sur des communications par courants porteurs en ligne PLC. Le réseau de communication 120 est par exemple un réseau d'alimentation électrique de type AMM permettant à un dispositif noeud de base (aussi appelé « concentrateur de données ») de collecter, auprès de compteurs électriques intelligents, des données de relevés de consommation énergétique d'installations électriques que lesdits compteurs électriques intelligents sont respectivement en charge de surveiller. Le concentrateur de données et les compteurs électriques intelligents sont ainsi des dispositifs noeuds du réseau de communication 120. Le réseau de communication 120 peut comporter d'autres dispositifs noeuds, par exemple installés au niveau de transformateurs électriques.

Le réseau de communication 120 a une structure maillée. La structure maillée du réseau de communication 120 est représentée schématiquement sur la Fig. 1 grâce à des flèches représentant les liens de communication entre deux noeuds voisins et où des dispositifs noeuds jouent le rôle de relais pour augmenter la portée des communications dans le réseau de communication 120. Un même compteur électrique intelligent dispose ainsi potentiellement de plusieurs chemins pour atteindre le concentrateur de données, et vice versa.

La présente invention est donc particulièrement adaptée au contexte de la technologie G3-PLC.

Le réseau de communication 120 comporte ainsi une pluralité de dispositifs noeuds 130, 131, 132, 133, 134, 135, 136, 137, 138, 139. A chacun des dispositifs noeuds du réseau de communication 120 est associé un voisinage réseau. Par exemple, le dispositif noeud 133 de la Fig. 1 est associé à un voisinage réseau 110 englobant les dispositifs noeuds 130, 134 et 137. Dans le réseau de communication 120, un signal ou un message diffusé par un dispositif noeud, tel que, par exemple, le dispositif noeud 133, n'est généralement pas visible en tout point du réseau de communication 120. Chaque dispositif noeud émetteur de signaux ou de messages dispose alors d'un voisinage réseau, c'est-à-dire d'un sous-ensemble du réseau de communication 120 dans lequel tout dispositif noeud peut recevoir de manière intelligible les signaux ou messages directement en provenance du dispositif noeud ayant diffusé ces signaux ou messages. Le voisinage réseau correspond à la portée des signaux émis, en fonction de paramètres prédéterminés de transmission (e.g. puissance, schéma de modulation et de codage, topologie réseau...) du dispositif noeud à la source des signaux et aussi potentiellement en fonction de caractéristiques du canal de communication telles que, par exemple, une atténuation, un niveau de bruit, une impédance.

Le réseau de communication 120 s'appuie sur un protocole de routage de type réactif, tel que, par exemple, le protocole LOADng (« Lightweight On-demand Ad hoc Distancevector Routing Protocol - Next Génération » en anglais). Contrairement aux protocoles de routage de type proactif qui s'appuient sur une connaissance globale de topologie réseau, les protocoles de routage de type réactif s'appuient sur des découvertes de routes à la demande, chaque dispositif noeud du réseau ayant alors besoin uniquement d'avoir connaissance de son propre voisinage réseau pour router des données dans le réseau de communication 120.

Pour découvrir une route appropriée dans le réseau de communication 120 depuis un dispositif noeud source (par exemple le dispositif noeud 133) jusqu'à un dispositif noeud destination (par exemple le dispositif noeud 132), il est connu que le dispositif noeud source diffuse (« broadcast » en anglais) une requête de découverte de route, appelée RREQ (« Route REQuest » en anglais). Une copie de cette requête de découverte de route est reçue par chaque dispositif noeud dans le voisinage réseau dudit dispositif noeud source. Chaque dispositif noeud dans le voisinage réseau dudit dispositif noeud source relaie, par diffusion, ladite copie de la requête si ledit dispositif noeud en question n'est pas le dispositif noeud destination. Par diffusion de proche en proche, plusieurs copies de la requête de découverte de route sont typiquement reçues par le dispositif noeud destination, chacune de ces copies ayant suivi une route différente dans le réseau de communication 120.

L'utilisation de tables de routage mémorisées dans les dispositifs noeuds permet d'effectuer des communications point-à-point (« unicast » en anglais) entre toute paire de dispositifs noeuds du réseau de communication 120. Des dispositifs noeuds intermédiaires servent donc de relais lorsque les dispositifs noeuds de ladite paire ne sont pas dans le voisinage réseau l'un de l'autre, les communications s'opèrent ainsi de proche en proche, chaque dispositif noeud s'appuyant sur un de ses propres voisins pour faire suivre des messages jusqu'à leurs destinataires respectifs.

Pour communiquer entre dispositifs noeuds voisins (c'est-à-dire des dispositifs noeuds qui sont dans le voisinage réseau l'un de l'autre), les messages sont transmis sous forme de trames modulées. Lorsqu'une trame modulée est spécifiquement adressée à un dispositif noeud voisin et qu'elle est correctement démodulée par celui-ci, ledit dispositif noeud voisin retransmet un acquittement ACK au dispositif noeud qui lui a adressé ladite trame modulée. L'acquittement ACK est transmis sur la même bande fréquentielle que la trame modulée à laquelle ledit acquittement ACK est associé.

Plusieurs bandes fréquentielles sont définies pour supporter la transmission de ces trames modulées, un schéma de modulation adapté étant associé avec chacune de ces bandes fréquentielles. Chaque trame transmise sous forme de signaux modulés débute par un préambule prédéfini en fonction du schéma de modulation selon lequel lesdits signaux ont été modulés. Le préambule est adapté pour permettre de se synchroniser en réception sur ladite trame, c'est-à-dire de pouvoir déterminer un instant effectif de début de trame. Pour ce faire, le préambule comporte typiquement une pluralité de copies successives d'un même symbole. Le contenu effectif et la durée du préambule sont ainsi prédéfinis et dépendent du schéma de modulation utilisé. Les préambules de plusieurs trames sont identiques lorsque le même schéma de modulation est appliqué, et diffèrent sinon.

Les schémas de modulation applicables (et des schémas de démodulation correspondants) sont préférentiellement des schémas de modulation (respectivement schémas de démodulation) multi-porteuse de type OFDM (« Orthogonal Frequency Division Multiplex » en anglais).

Dans un mode de réalisation particulier, les bandes fréquentielles sont disjointes.

En termes de bandes fréquentielles utilisables dans le cadre de la mise en oeuvre du réseau de communication 120, on peut citer : la bande fréquentielle CENELEC A, qui va d'approximativement 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Il est alors possible d'utiliser : un premier schéma de modulation à trente-six porteuses dans la bande fréquentielle CENELEC A ; un second schéma de modulation à soixante-douze porteuses dans la bande fréquentielle FCC ; un troisième schéma de modulation à cinquante-quatre porteuses dans la bande fréquentielle ARIB ; et un quatrième schéma de modulation à seize porteuses dans la bande fréquentielle CENELEC B. Il apparaît de ce qui précède, qu'un dispositif noeud peut utiliser simultanément plusieurs bandes fréquentielles pour communiquer avec un ou plusieurs de ses voisins, en appliquant un mécanisme de transmission adapté. Toutefois, il apparaît que les bandes fréquentielles ARIB et FCC ne peuvent pas être utilisées simultanément par un même dispositif noeud, étant donné qu'elles se recouvrent.

Avantageusement, au moins une partie des dispositifs noeuds 130, 131, 132, 133, 134, 135, 136, 137, 138, 139 sont configurés pour communiquer dans plusieurs bandes fréquentielles. Il est dès lors important, pour un dispositif noeud donné, de pouvoir déterminer quels sont les modes de communication supportés par un dispositif noeud dans son voisinage réseau. Les termes « modes de communications supportés » désignent un ou plusieurs modes de communication natifs d'un dispositif noeud, c'est-à-dire que ce dernier est capable d'implémenter du fait de ses configurations possibles, et impliquent aussi que ce ou ces modes de communication natifs soient utilisables à un instant donné, compte tenu des éventuelles perturbations qui peuvent exister. Les perturbations peuvent être issues, par exemple, d'un environnement bruité.

Selon un mode de réalisation de l'invention, un dispositif noeud initiateur configuré pour communiquer dans plusieurs bandes fréquentielles avec un dispositif noeud voisin cible peut déterminer, au besoin, quels sont les modes de communication supportés par ce dispositif noeud voisin cible, préalablement à un envoi de messages plus conséquents constituant des communications.

Les termes « dispositif noeud initiateur » désignent ici un dispositif exécutant le procédé de détermination d'un mode de communication aux fins de communiquer avec un dispositif noeud voisin cible, c'est-à-dire situé dans son voisinage réseau. Les termes « dispositif noeud cible » désignent ici un dispositif recevant une ou plusieurs requêtes en estimation de canal de la part d'un dispositif noeud initiateur voisin exécutant le procédé de détermination d'un mode de communication et qui sera normalement destinataire (et donc cible), après détermination d'un mode de communication, de communications opérées dans ce mode.

Afin de déterminer quels sont les modes de communication supportés par un dispositif noeud voisin cible (par exemple le dispositif noeud 134), un dispositif noeud initiateur (par exemple le dispositif noeud 133) envoie, dans chacune des bandes fréquentielles pour lesquelles il est configuré pour communiquer, des messages au dispositif noeud voisin cible, lesquels messages comprennent chacun une information visant à solliciter, auprès du dispositif noeud cible, une estimation de canal dans la bande fréquentielle utilisée. La présence de l'information visant à solliciter une estimation de canal constitue une requête en estimation de canal. Par exemple, dans un contexte de réseau compatible avec la norme G3-PLC (marque déposée), l'information selon laquelle une estimation de canal est demandée par un dispositif noeud initiateur à un dispositif noeud voisin cible est un indicateur *Tone Map Request* d'un entête de contrôle de trame défini selon la recommandation ITU-T G9903 et les informations représentatives d'au moins une estimation de canal, reçues depuis le dispositif noeud voisin cible sont comprises dans un message *Tone Map Response* défini selon la recommandation ITU-T G9903.

Le dispositif noeud initiateur analyse ensuite la ou les réponses éventuellement reçues de la part du dispositif noeud cible et détermine, grâce à l'une ou plusieurs des informations reçues dans un ou plusieurs éventuels messages reçus en réponse, quels sont les modes de communications supportés par le dispositif noeud voisin cible, puis, éventuellement, quel est le mode de communication le plus performant parmi ces modes de communication disponibles. Les informations reçues en réponse à une requête en estimation de canal sont représentatives, outre de la capacité du dispositif noeud cible à recevoir un message dans une bande fréquentielle déterminée, de la qualité du canal établi dans cette bande fréquentielle.

Selon un mode de réalisation, le message de réponse à une requête en estimation de canal est implémenté sous la forme d'un bloc d'information dit *Tone Map Response* tel que défini dans la norme G3-PLC (ITU G.9903 édition de mars 2017). Dans un exemple de réalisation, le bloc de données *Tone Map Response* comprend des informations telles que le type de modulation qu'il utilise pour la bande fréquentielle en question et un indicateur LQI de qualité de lien (LQI est l'acronyme anglais de « Link Quality Indicator »).
Le bloc de données *Tone Map Response* peut contenir d'autres informations telles que définies dans la table 9.9 de la section 9.3.5.2.2 de la recommandation ITU-T G9903 (version de Mars 2017), notamment une carte des tonalités (« Tone Map » en anglais). La carte des tonalités est une liste de sous-porteuses utilisées pour communiquer dans une bande fréquentielle donnée. Selon un mode de réalisation, le dispositif noeud cible, voisin du dispositif noeud initiateur, répond au dispositif noeud initiateur voisin dans chacune des bandes fréquentielles dans laquelle il a reçu un message comprenant une requête en estimation de canal. Ainsi, une absence de réponse dans l'une des bandes fréquentielles utilisée par un dispositif noeud initiateur pour adresser une requête en estimation de canal signifie que le dispositif noeud cible n'est pas configuré pour communiquer dans cette bande fréquentielle avec le dispositif noeud initiateur, ou encore que le dispositif noeud cible n'a pas pu recevoir correctement la requête en estimation de canal, du fait d'une perturbation dans la transmission du message comprenant cette requête, ou que cette bande fréquentielle n'a pas à être utilisée par le dispositif noeud initiateur pour communiquer avec le dispositif noeud cible.

Selon un mode de réalisation, le dispositif noeud initiateur enregistre la ou les informations représentatives d'une estimation de canal pour chaque bande fréquentielle pour laquelle il a reçu de telles informations en réponse à une requête en estimation de canal.

Le dispositif noeud initiateur détermine ensuite, à partir de ces informations, quels sont les modes de communication supportés par le dispositif noeud voisin cible et enregistre ces informations dans une table d'informations de voisinage qui comprend des informations représentatives de paramètres de tous les dispositifs noeuds voisins identifiés.

Selon une variante, un dispositif noeud initiateur peut comprendre plusieurs tables de voisinage, chacune des tables correspondant à un dispositif noeud voisin cible précédemment détecté et identifié.

Lorsqu'un nouveau dispositif noeud est ajouté dans le voisinage réseau d'un dispositif noeud déterminé, des informations correspondantes à ce nouveau dispositif noeud voisin sont ajoutées dans la ou les tables d'informations de voisinage des dispositifs noeuds voisins, après que le nouveau dispositif noeud ait pu être détecté et identifié, et que les paramètres à enregistrer aient pu être définis par des échanges de messages semblables à ceux précédemment décrits, notamment.

Ainsi, un dispositif noeud du réseau qui souhaite initier une communication avec un dispositif noeud voisin, peut avantageusement consulter la table d'informations de voisinage qui correspond au dispositif noeud cible pour déterminer quel est le meilleur mode de communication à utiliser avec ce dispositif noeud cible.

Dans le cas où un problème de communication survient, tel qu'une absence totale de transmission ou encore une transmission très perturbée, ou encore si un temps de validité d'une table d'informations de voisinage est échu, le dispositif noeud initiateur ayant initié la communication peut simplement exécuter à nouveau le procédé de détermination d'un mode de communication pour redéfinir quels sont les modes de communications supportés par le dispositif noeud cible, et éventuellement le meilleur mode de communication avec ce dispositif noeud cible, préalablement à l'établissement d'une nouvelle communication avec ce dispositif noeud cible.

Des problèmes de communication peuvent être détectés grâce à un contrôle de taux d'erreurs ou encore à l'utilisation de protocoles visant à vérifier la bonne réception ou encore l'intégrité des messages transmis.

La **Fig. 2** illustre un premier échange de messages entre le dispositif noeud 133 et le dispositif noeud 134, voisin du dispositif noeud 133. Les dispositifs noeuds 133 et 134 sont représentés par des barres verticales situées respectivement à gauche et à droite de la Fig.2 et les messages échangés entre les deux dispositifs sont chacun représentés par une flèche allant de l'un à l'autre des dispositifs noeuds 133 et 134, voisins l'un de l'autre. Une lecture de haut en bas de la Fig. 2 correspond à un déroulement chronologique d'étapes (ici, S2 à S5) et illustre des étapes clés d'un exemple de procédé de détermination d'un mode de communication selon un mode de réalisation.

Ainsi à une étape **S2,** le dispositif noeud de communication 133 adresse au dispositif noeud 134 un message TM-RQ-B 1 comprenant une information selon laquelle une estimation de canal est sollicitée auprès du dispositif noeud 134 pour la bande fréquentielle B1 (requête en estimation de canal). La requête en estimation de canal du message TM-RQ-B1 est adressée au dispositif noeud 134 par le dispositif noeud 133 dans une bande fréquentielle B1. La bande fréquentielle B 1 est, par exemple, une bande fréquentielle choisie parmi le groupe de bandes fréquentielles composé de la bande fréquentielle CENELEC A, la bande fréquentielle CENELEC B, et la bande fréquentielle FCC ou la bande fréquentielle ARIB.

Selon un mode de réalisation, la requête en estimation de canal est implémentée sous la forme d'un bit positionné à 1 dans un champ TMR d'un entête de contrôle de trame d'un message, tel que défini dans la norme G3-PLC (ITU G.9903 édition 2017). De façon similaire, le dispositif noeud 133 adresse également un second message TMR-RQ-B2 comprenant une requête en estimation de canal au dispositif noeud 134 à une étape **S3.** La requête en estimation de canal du message TM-RQ-B2 est adressée au dispositif noeud 134 par le dispositif noeud 133 dans une bande fréquentielle B2. La bande fréquentielle B2 est, par exemple, également une bande fréquentielle choisie, distinctement de la bande fréquentielle B1, parmi le groupe de bandes fréquentielles composé de la bande fréquentielle CENELEC A, la bande fréquentielle CENELEC B, et la bande fréquentielle FCC ou la bande fréquentielle ARIB. Dans cet exemple d'échange de messages, le dispositif noeud 134 ne répond pas à la requête en estimation de canal dans la bande fréquentielle B1, mais adresse, lors d'une étape **S4,** un message TM-RSP-B2, en réponse au message TM-RQ-B2, comprenant une ou plusieurs informations en lien avec une estimation de canal dans la bande fréquentielle B2 effectuée par le dispositif noeud 134. Selon un mode de réalisation, le message de réponse TM-RSP-B2 est implémenté sous la forme d'un bloc d'information dit « TONE MAP RESPONSE » tel que défini dans la norme G3-PLC (ITU G.9903 édition 2017).

Le dispositif noeud 133 enregistre alors, à une étape **S5,** les informations reçues, représentatives de l'estimation de canal réalisée par le dispositif noeud 134 dans la bande fréquentielle B2, sous la forme d'un bloc d'informations dans une table de voisinage NT-REC d'une mémoire interne au dispositif noeud 133. Le dispositif noeud 133 est ainsi avantageusement capable de déterminer que le dispositif noeud ne supporte pas la communication dans la bande fréquentielle B1 ou n'a éventuellement pas pu recevoir le message TMR-RQ-B1. Il est en outre possible que le message TMR-RQ-B1 envoyé au dispositif noeud 134 par le dispositif noeud 133 ait bien été reçu par le dispositif noeud 134, mais que le dispositif noeud 133 n'ait pas pu recevoir un éventuel message en réponse, du fait d'une perturbation sur le lien de communication entre les deux dispositifs noeuds voisins 133 et 134.

A partir des informations reçues et enregistrées dans la table de voisinage NT-REC, le dispositif noeud 133 peut déterminer, préalablement à des communications ultérieures avec le dispositif noeud 134, quels sont les modes de communication supportés par ce dernier, voire, parmi ces modes de communication, quel est le mode supporté offrant le meilleur niveau de performance pour un ou plusieurs messages à émettre ultérieurement vers le dispositif noeud voisin 134. Selon l'exemple décrit sur la Fig. 2, le dispositif noeud 133 détecte que le dispositif noeud voisin 134 est un dispositif noeud mono-bande capable de communiquer dans la bande fréquentielle B2.

Avantageusement, le dispositif noeud 133 établit des premiers indicateurs de qualité à partir des informations successivement reçues et représentatives d'estimation de canal dans les bandes fréquentielles testées, de sorte à pouvoir déterminer ensuite un mode de transmission avec le dispositif noeud 134 en comparant ces premiers indicateurs de qualité de transmission respectivement déterminés, pour chacune des bandes fréquentielles.

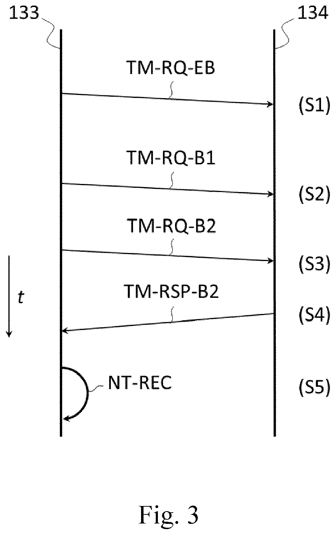

La **Fig. 3** illustre un second échange de messages entre le dispositif noeud 133 et le dispositif noeud 134 selon un mode de représentation semblable à celui de la Fig. 2. Selon un mode de réalisation, le dispositif noeud 133 est un dispositif noeud multi-bande configuré pour opérer des communications dans la bande fréquentielle B1 et la bande fréquentielle B2, mais aussi dans une bande fréquentielle EB, dite « bande étendue », laquelle regroupe les bandes fréquentielles B1 et B2. En d'autres termes, cela signifie que le dispositif noeud 133 est configuré pour pouvoir traiter des communications dans la bande fréquentielle étendue EB, plus large que la bande fréquentielle B1 ou que la bande fréquentielle B2 prises isolément, et que des circuits internes du dispositif noeud 133 sont configurés pour pouvoir générer une trame modulée sur l'ensemble des sous-porteuses des bandes fréquentielles B1 et B2.

Avantageusement, la bande fréquentielle étendue EB couvre l'ensemble des sous-porteuses disponibles dans les différentes bandes supportées par le dispositif noeud 133, dont notamment les bandes fréquentielles B1 et B2. La répartition de symboles à émettre sur la bande fréquentielle étendue EB implique donc d'adapter les mécanismes d'encodage, de correction d'erreurs et d'entrelacement de données utilisés par des modes de communications en bande « non étendue », telle que la bande fréquentielle B1 ou la bande fréquentielle B2.

Par exemple, l'implémentation de la bande fréquentielle étendue EB peut reposer sur des circuits émetteurs distincts du dispositif noeud 133 dont le pilotage pourra être mutualisé sous le contrôle d'une unité de contrôle interne configurée pour gérer les communications.

Bien évidemment, le mode de communication dans la bande fréquentielle étendue EB ainsi supporté n'est applicable qu'entre dispositifs noeuds compatibles, c'est-à-dire supportant la bande fréquentielle étendue EB. Selon un mode de réalisation, un dispositif noeud supportant la bande fréquentielle étendue EB peut restreindre, par configuration, son utilisation à une bande fréquentielle spécifique parmi celles constituant la bande fréquentielle étendue EB, telle que, par exemple, la bande fréquentielle B1 ou encore la bande fréquentielle B2.

Avantageusement, une compatibilité ascendante entre dispositifs noeuds est supportée par des échanges protocolaires de messages, tels que celui illustré sur la Fig. 3.

Selon un mode de réalisation, le dispositif noeud 133, configuré pour opérer des communications dans la bande fréquentielle étendue EB, envoie un message TM-RQ-EB au dispositif noeud 134. Le message est envoyé au dispositif noeud 134 dans la bande fréquentielle étendue EB, selon le principe de transposition précédemment décrit, et comprend une information selon laquelle une estimation de canal est sollicitée dans la bande fréquentielle étendue EB auprès du dispositif noeud 134. Selon un mode de réalisation, la requête en estimation de canal est implémentée sous la forme d'un bit positionné à 1 dans un champ TMR d'un entête de contrôle de trame d'un message faisant référence à une utilisation de la bande fréquentielle étendue EB de sorte que, si le dispositif noeud 134 est configuré pour communiquer avec le dispositif noeud 133 dans la bande fréquentielle étendue EB, il envoie un message en réponse à la requête en estimation de canal reçue depuis le dispositif noeud 133. Ainsi, l'exemple illustré sur la Fig. 3 montre que le dispositif noeud 134 n'est pas configuré pour communiquer en bande fréquentielle étendue EB, avec le dispositif noeud 133, puisqu'il ne répond pas au message TM-RQ-EB transmis. Le dispositif noeud 133 envoie alors des messages TM-RQ-B1 et TM-RQ-B2 comprenant chacun une requête en estimation de canal dans les bandes fréquentielles B1 et B2, tel que cela est déjà illustré sur la Fig.2.

L'envoi préalable d'une requête en estimation de canal dans la bande fréquentielle EB permet au dispositif noeud 133 de vérifier si le dispositif noeud 134 supporte un mode de communication en bande fréquentielle étendue EB, avant que de ne vérifier quels sont les éventuels autres modes supportés, dans les bandes fréquentielles B1 et B2, par exemple. Il est à noter que la requête en estimation de canal envoyée dans la bande fréquentielle étendue EB, par le dispositif noeud 133 au dispositif noeud 134, peut être adressée préalablement ou postérieurement aux autres échanges de messages réalisés aux étapes S2 à S4.

La capacité du dispositif noeud 134 à communiquer ou non dans la bande fréquentielle étendue EB avec le dispositif noeud 133 est enregistrée dans la table de voisinage NT-REC du dispositif noeud 133 sous la forme d'une ou plusieurs informations.

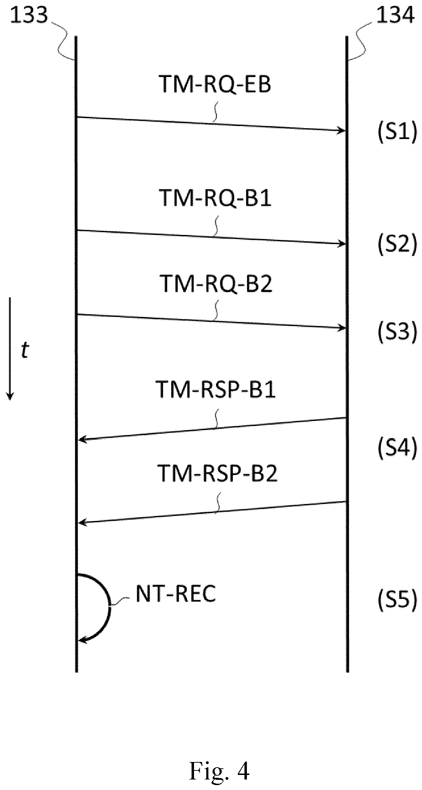

La **Fig. 4** illustre un troisième échange de messages entre le dispositif noeud 133 et le dispositif noeud 134 selon un mode de représentation semblable à celui déjà utilisé sur la Fig. 2 et sur la Fig. 3. L'échange de messages représentés illustre que le dispositif noeud 134 ne répond pas au message TM-RQ-EB de requête en estimation de canal envoyé à l'étape S1 par le dispositif noeud 133, mais répond ensuite aux deux messages TM-RQ-B1 et TM-RQ-B2 respectivement envoyés lors des étapes S2 et S3 au dispositif noeud 134 dans les bandes fréquentielles B1 et B2. Les messages de réponse TM-RSP-B1 et TM-RSP-B2 envoyés à l'étape S4 comprennent chacun des informations représentatives de l'estimation de canal de la bande fréquentielle concernée. Ainsi le message TM-RSP-B 1 comprend des informations représentatives d'une estimation de canal dans la bande fréquentielle B1 et le message TM-RSP B2 comprend des informations représentatives d'une estimation de canal dans la bande fréquentielle B2. Ces informations sont enregistrées dans la table de voisinage réseau NT-REC à l'étape S5. Le dispositif noeud 133 peut constater que, selon les réponses reçues dans cet exemple, le dispositif noeud 134 ne supporte pas le mode de communication en bande fréquentielle étendue EB mais supporte des modes de communication dans la bande fréquentielle B 1 ainsi que dans la bande fréquentielle B2.

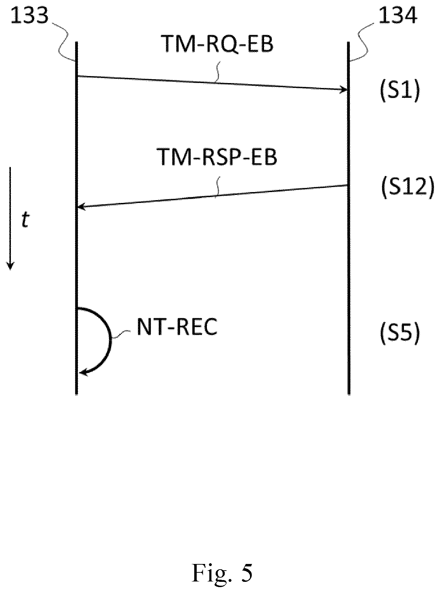

La **Fig. 5** illustre un quatrième échange de messages entre le dispositif noeud 133 et le dispositif noeud 134 selon un mode de représentation semblable à celui déjà utilisé sur la Fig. 2, sur la Fig. 3 et sur la Fig. 4. Dans cet exemple d'échange de messages entre les dispositifs noeuds voisins 133 et 134, le dispositif noeud 134 répond lors d'une étape S12 par un message TM-RSP-EB à un message TM-REQ-EB émis lors de l'étape S1 et comprenant une requête en estimation de canal. Selon cet exemple, le message TM-RSP-EB, en réponse au message TM-REQ-EB, comprend des informations représentatives d'une estimation de canal en bande fréquentielle étendue EB et le dispositif noeud 133 peut déduire que le dispositif noeud 134 est configuré pour communiquer avec lui dans la bande fréquentielle étendue EB. Ainsi, par exemple, le dispositif noeud 133 n'adresse, ultérieurement au message TM-REQ-EB, aucun autre message en vue d'obtenir une estimation de canal dans une bande fréquentielle autre que la bande fréquentielle étendue EB.

Bien évidemment, cet exemple n'est pas limitatif, et il peut être intéressant d'obtenir des informations sur la communication en bande fréquentielle étendue EB ainsi que des informations sur chacune des autres bandes fréquentielles B1 et B2 avec le dispositif noeud 134, préalablement à une sélection d'un mode de communication avec ce dernier, par le dispositif noeud 133.

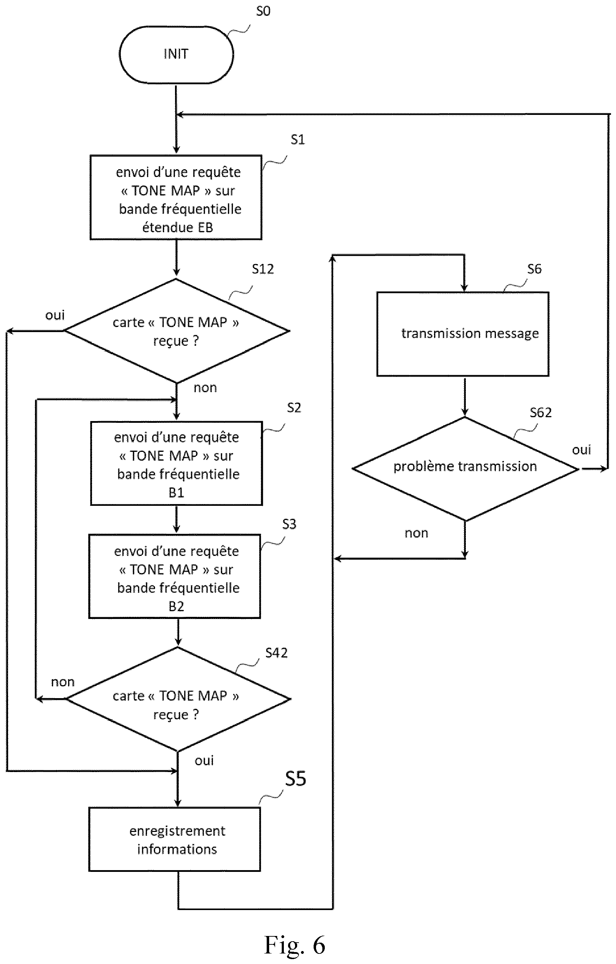

La **Fig. 6** est un ordinogramme illustrant un procédé de détermination d'un mode de communication entre deux dispositifs noeuds voisins l'un de l'autre dans le réseau de communication 120, selon un mode de réalisation. Ces dispositifs noeuds sont, à titre d'exemple, le dispositif noeud 133 opérant comme un dispositif noeud initiateur et le dispositif noeud voisin 134, opérant comme un dispositif noeud cible.

Au terme d'une étape d'initialisation S0, les dispositifs noeuds 133 et 134 sont configurés pour communiquer l'un avec l'autre selon au moins un mode de communication dans au moins une bande fréquentielle. Il est considéré que les dispositifs sont alors normalement opérationnels à ce stade et qu'un échange de messages peut être initié.

Selon le mode de réalisation illustré sur la Fig. 6, le dispositif noeud initiateur 133 envoie, à l'étape S1, un message comprenant une information selon laquelle une requête en estimation de canal dans une bande fréquentielle étendue EB est sollicitée vers le dispositif noeud cible, et attend pendant un temps prédéterminé un éventuel message en réponse. Au terme du délai prédéterminé, le dispositif noeud initiateur 133 vérifie à l'étape S12, si une réponse a bien été reçue sous la forme d'un message comprenant des informations représentatives d'une estimation de canal dans la bande fréquentielle EB. Dans l'affirmative, le dispositif noeud initiateur 133 enregistre à l'étape S5 les informations reçues et représentatives d'une estimation de canal dans la bande fréquentielle étendue EB, dans sa table de voisinage NT-REC, et détermine un mode de communication préférentiel, compte tenu notamment des différentes informations disponibles dans la table de voisinage NT-REC. Par exemple, le dispositif noeud initiateur 133 détermine que le mode de communication en bande fréquentielle étendue EB est le mode de communication le plus avantageux à cet instant pour communiquer avec le dispositif noeud cible 134, et initie une transmission dans ce mode là, dans la bande fréquentielle étendue EB, à l'étape S6.

Selon le mode de réalisation, en l'absence de réponse de la part du dispositif noeud cible 134 après un temps prédéterminé, le dispositif noeud initiateur 133 considère que le dispositif noeud cible 134 ne supporte pas une communication selon un mode de communication dans la bande étendue et envoie, lors des étapes S2 et S3, des messages comprenant respectivement une requête en estimation de canal dans la bande fréquentielle B1 et une requête en estimation de canal dans la bande fréquentielle B2. Le dispositif noeud initiateur 133 attend alors une éventuelle réponse à l'un au moins de ces deux messages, ou à chacun de ces deux messages, et enregistre les informations représentatives d'une ou plusieurs estimations de canal, reçues en réponse, dans une ou plusieurs tables de voisinage NT-REC, avant que de ne communiquer ultérieurement à l'étape S6. Dans le cas où, aucun message n'est reçu en réponse à une requête en estimation de canal émise par le dispositif noeud initiateur, à l'étape S42, le procédé reprend à l'étape S2 et le dispositif noeud initiateur envoie à nouveau des messages au dispositif noeud cible, jusqu'à ce qu'une réponse soit obtenue dans l'une au moins des deux bandes fréquentielles B1 et B2. Un nouveau message comprenant une requête en estimation de canal (indicateur TMR positionné à 1, par exemple, en G3-PLC) peut être envoyé dès lors que des données doivent être transmises au dispositif noeud cible 134.

Lorsque des communications sont établies à l'étape S6, dans un mode de communication déterminé entre les deux dispositifs noeuds, et en l'absence de problème de communication détecté lors d'une étape S62 visant à définir un niveau de qualité de communication, les communications continuent selon le mode de communication sélectionné. A contrario, si un problème de qualité des communications est détecté, le procédé de détermination est relancé à partir de l'étape S1.

Avantageusement, la détermination du mode de transmission comprend une étape de comparaison de premiers indicateurs de qualité de transmission respectivement déterminés, pour chacune des bandes fréquentielles, à partir des informations enregistrées associées à chacune des au moins deux bandes fréquentielles B1 et B2. Dans le cas où les informations reçues, représentatives d'une ou plusieurs estimations de canal indiquent que les bandes fréquentielles disponibles présentent des perturbations importantes, la détermination du mode de transmission peut comprendre en outre une sélection d'un mode de transmission dit « robuste » utilisant une modulation BPSK et une répétition systématique des bits transmis (par exemple, chaque bit est répété quatre fois ou six fois au cours d'une transmission). La sélection d'un mode de transmission dit « robuste » dépend, par exemple d'un niveau de qualité de transmission défini à partir d'une estimation d'un canal de transmission établi via une transmission multi-bandes dans lesdites au moins deux bandes fréquentielles B1 et B2.

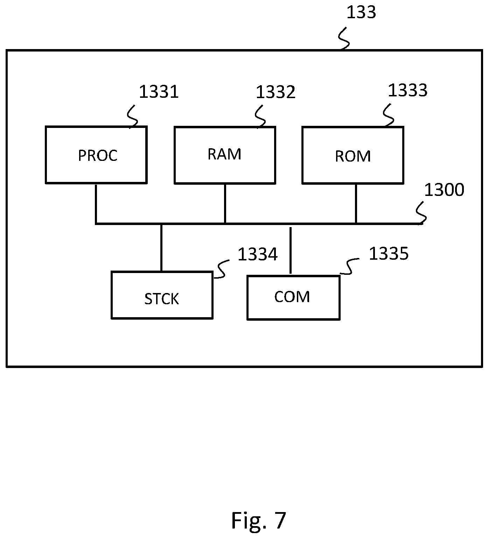

La **Fig. 7** illustre schématiquement un exemple d'architecture interne de tout dispositif noeud du réseau de communication 120. Considérons à titre illustratif que la Fig. 7 illustre un agencement interne du dispositif noeud 133. Un tel dispositif noeud est qualifié de multi-bande car capable de transmettre un message sur plusieurs bandes fréquentielles. On note que la Fig. 7 pourrait aussi illustrer schématiquement un exemple d'architecture matérielle d'un module de traitement compris dans le dispositif noeud.

Selon l'exemple d'architecture matérielle représenté à la Fig. 7, le dispositif noeud 133 comprend alors, reliés par un bus de communication 1300 : un processeur ou CPU (« Central Processing Unit » en anglais) 1331 ; une mémoire vive RAM (« Random Access Memory » en anglais) 1332 ; une mémoire morte ROM (« Read Only Memory » en anglais) 1333 ; une unité de stockage telle qu'un disque dur (ou un lecteur de support de stockage, tel qu'un lecteur de cartes SD (« Secure Digital » en anglais) 1334 ; au moins une interface de communication 1335 permettant au dispositif noeud 133 de communiquer avec les dispositifs noeuds appartenant à son voisinage réseau, tels que, par exemple les dispositifs noeuds 134 et 137.

Le processeur 1301 est capable d'exécuter des instructions chargées dans la RAM 1332 à partir de la ROM 1333, d'une mémoire externe (non représentée), d'un support de stockage (tel qu'une carte SD), ou d'un réseau de communication. Lorsque le dispositif noeud est mis sous tension, le processeur 1331 est capable de lire de la RAM 1332 des instructions et de les exécuter. Ces instructions forment un programme d'ordinateur causant la mise en oeuvre, par le processeur 1331, de tout ou partie des échanges et procédés décrits en relation avec les Figs. 2, 3, 4 et 5.

Tout ou partie des échanges et procédés décrits en relation avec les Figs. 2, 3, 4 et 5 peuvent être implémentés sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif noeud 133 comprend de la circuiterie électronique configurée pour mettre en oeuvre les procédés décrits en relation avec le dispositif noeud 133 (de même pour le dispositif noeud 134).

## Revendications

1. Procédé de détermination d'un mode de transmission dans une bande fréquentielle entre des premier et second dispositifs noeuds d'un réseau de communication (120) par courants porteurs en ligne, le premier dispositif noeud (133) étant situé dans le voisinage réseau du second dispositif noeud (134) et vice-versa, le premier dispositif noeud (133) étant configuré pour communiquer dans au moins deux bandes fréquentielles (B1, B2), et le second dispositif noeud (134) étant configuré pour communiquer dans au moins une desdites au moins deux bandes fréquentielles, le procédé étant exécuté par le premier dispositif noeud (133), le procédé comprenant :
- Transmettre (S2, S3) un exemplaire d'un premier message (TM-RQ-B1, TM-RQ-B2) vers le second dispositif noeud dans chacune desdites au moins deux bandes fréquentielles, ledit premier message comprenant une information selon laquelle une estimation de canal est demandée au second dispositif noeud par ledit premier dispositif noeud,
et le procédé étant **caractérisé en ce qu'**il comprend en outre :
- Transmettre (S1), sur une bande fréquentielle étendue (EB), un message (TM-RQ-EB) comprenant une référence à ladite bande fréquentielle étendue (EB) vers le second dispositif noeud (134), ladite bande fréquentielle étendue (EB) comprenant lesdites au moins deux bandes fréquentielles (B1, B2), et ledit message comprenant une information selon laquelle une estimation de canal de ladite bande fréquentielle étendue (EB) est demandée au second dispositif noeud par ledit premier dispositif noeud,
- Recevoir (S4, S12) un second message émis par le second dispositif noeud sur chaque bande fréquentielle (B1, B2, EB) via laquelle le second dispositif noeud (134) a reçu un message comprenant une information selon laquelle une estimation de canal est demandée, chaque second message comprenant des informations représentatives d'une estimation de canal pour la bande fréquentielle (B1, B2, EB) via laquelle ledit second message est reçu,
- Enregistrer (S5), par le premier dispositif noeud (133), les informations représentatives de l'estimation de canal contenues dans chaque second message reçu, et
- déterminer, à partir des informations enregistrées, un mode de transmission dans une des bandes fréquentielles d'un troisième message à émettre ultérieurement depuis le premier dispositif noeud (133) vers le second dispositif noeud (134).

2. Procédé selon l'une des revendications précédentes, dans lequel la détermination d'un mode de transmission comprend une étape de comparaison de premiers indicateurs de qualité de transmission respectivement déterminés, pour chacune des bandes fréquentielles, à partir des informations enregistrées associées à chacune des au moins deux bandes fréquentielles.

3. Procédé selon l'une des revendications précédentes, dans lequel la détermination d'un mode de transmission comprend en outre une sélection d'un mode de transmission dit « robuste » selon un niveau de qualité défini à partir d'une estimation d'un canal de transmission établi via une transmission multi-bandes dans lesdites au moins deux bandes fréquentielles.

4. Procédé selon la revendication 3, dans lequel la transmission multi-bandes est effectuée en utilisant une modulation de type BPSK et une répétition des bits transmis.

5. Procédé selon l'une des revendications précédentes, dans lequel lesdites au moins deux bandes fréquentielles sont prises parmi le groupe : bande fréquentielle CENELEC A, bande fréquentielle CENELEC B, et bande fréquentielle FCC ou bande fréquentielle ARIB.

6. Procédé selon l'une des revendications précédentes, dans lequel ladite information selon laquelle une estimation canal est demandée au second dispositif noeud (134) par ledit premier dispositif noeud (133) est un indicateur *Tone Map Request* d'un entête de contrôle de trame défini selon la recommandation ITU-T G9903 et les informations représentatives d'au moins une estimation de canal, reçues depuis le second dispositif noeud sont comprises dans un message *Tone Map Response* défini selon la recommandation ITU-T G9903.

7. Dispositif noeud (133) destiné à être utilisé dans un réseau de communication (120) par courants porteurs en ligne, ledit dispositif noeud (133) étant configuré pour communiquer avec un second dispositif noeud (134) situé dans son voisinage réseau (110) et pour communiquer dans au moins deux bandes fréquentielles (B1, B2), et le second dispositif noeud étant configuré pour communiquer dans au moins une desdites au moins deux bandes fréquentielles, le dispositif noeud (133) comprenant :
un module de transmission configuré pour transmettre (S2, S3) vers le second dispositif noeud, dans au moins deux bandes fréquentielles (B1, B2), un exemplaire d'un premier message comprenant, dans chacune des au moins deux bandes fréquentielles (B1, B2), une information selon laquelle une estimation de canal est demandée au second dispositif noeud (134), et le dispositif noeud (133) étant **caractérisé en ce qu'**il comprend en outre :
- un module de transmission pour transmettre (S1), dans une bande fréquentielle dite « bande étendue » (EB) un message comprenant une référence à ladite bande fréquentielle étendue vers le second dispositif noeud (134), ladite bande fréquentielle étendue (EB) comprenant lesdites au moins deux bandes fréquentielles (B1, B2), et ledit message comprenant une information selon laquelle une estimation de canal de ladite bande fréquentielle étendue est demandée au second dispositif noeud par ledit premier dispositif noeud
- un module de réception (S4, S12) d'au moins un second message, émis depuis le second dispositif nœud sur chaque bande fréquentielle via laquelle le second dispositif noeud a reçu un message comprenant une information selon laquelle une estimation de canal est demandée, chaque second message comprenant des informations représentatives d'une estimation de canal pour la bande fréquentielle (B 1, B2, EB) via laquelle ledit second message est reçu,
- un module d'enregistrement configuré pour enregistrer (S5) dans une mémoire dudit dispositif noeud, la ou des informations représentatives d'au moins une estimation de canal, reçues depuis ledit second dispositif noeud,
- une unité de contrôle configurée pour déterminer, à partir des informations enregistrées dans ladite mémoire, un mode de transmission dans une des bandes fréquentielles d'un troisième message à émettre ultérieurement depuis ledit dispositif noeud vers le second dispositif noeud.

8. Produit programme d'ordinateur **caractérisé en ce qu'**il comprend des instructions de codes de programme pour exécuter les étapes du procédé selon l'une quelconque des revendications 1 à 6, lorsque ledit programme est exécuté par un processeur.

9. Support de stockage d'informations comprenant un produit programme d'ordinateur selon la revendication précédente.

## Patentansprüche

1. Verfahren zur Bestimmung eines Übertragungsmodus in einem Frequenzband zwischen einer ersten und zweiten Knotenvorrichtung eines Powerline-Kommunikationsnetzwerks (120), wobei sich die erste Knotenvorrichtung (133) in der Netzwerkumgebung der zweiten Knotenvorrichtung (134) befindet und umgekehrt, wobei die erste Knotenvorrichtung (133) dazu ausgebildet ist, in wenigstens zwei Frequenzbändern (B1, B2) zu kommunizieren und die zweite Knotenvorrichtung (134) dazu ausgebildet ist, in wenigstens einem der wenigstens zwei Frequenzbänder zu kommunizieren, wobei das Verfahren von der ersten Knotenvorrichtung (133) ausgeführt wird, das Verfahren umfassend:
- Übertragen (S2, S3) eines Exemplars einer ersten Nachricht (TM-RQ-B1, TM-RQ-B2) zur zweiten Knotenvorrichtung in jedem der wenigstens zwei Frequenzbänder, wobei die erste Nachricht eine Information umfasst, gemäß welcher eine Kanalschätzung bei der zweiten Knotenvorrichtung durch die erste Knotenvorrichtung angefordert wird,
und wobei das Verfahren **dadurch gekennzeichnet ist, dass** es ferner Folgendes umfasst:
- Übertragen (S1), auf einem erweiterten Frequenzband (EB), einer Nachricht (TM-RQ-EB), die einen Verweis auf das erweiterte Frequenzband (EB) umfasst, zur zweiten Knotenvorrichtung (134), wobei das erweiterte Frequenzband (EB) die wenigstens zwei Frequenzbänder (B1, B2) umfasst und die Nachricht eine Information umfasst, gemäß welcher eine Kanalschätzung des erweiterten Frequenzbands (EB) bei der zweiten Knotenvorrichtung durch die erste Knotenvorrichtung angefordert wird,
- Empfangen (S4, S12) einer zweiten Nachricht, die von der zweiten Knotenvorrichtung auf jedem Frequenzband (B 1, B2, EB) ausgesendet wird, über welches die zweite Knotenvorrichtung (134) eine Nachricht empfangen hat, die eine Information umfasst, gemäß welcher eine Kanalschätzung angefordert wird, wobei jede zweite Nachricht Informationen umfasst, die für eine Kanalschätzung für das Frequenzband (B1, B2, EB) repräsentativ sind, über welches die zweite Nachricht empfangen wird,
- Abspeichern (S5), durch die erste Knotenvorrichtung (133), der Informationen, die für die Kanalschätzung repräsentativ sind, die in jeder zweiten Nachricht enthalten sind, und
- Bestimmen, anhand der abgespeicherten Informationen, eines Modus zur Übertragung einer dritten Nachricht in einem der Frequenzbänder, die zu einem späteren Zeitpunkt von der ersten Knotenvorrichtung (133) zur zweiten Knotenvorrichtung (134) auszusenden ist.

2. Verfahren nach einem der vorhergehenden Ansprüche, wobei das Bestimmen eines Übertragungsmodus einen Schritt des Vergleichens erster Übertragungsqualitätsindikatoren umfasst, die für jedes der Frequenzbänder anhand der abgespeicherten Informationen bestimmt werden, die jedem der wenigstens zwei Frequenzbänder zugeordnet sind.

3. Verfahren nach einem der vorhergehenden Ansprüche, wobei das Bestimmen eines Übertragungsmodus ferner ein Auswählen eines "robusten" Übertragungsmodus gemäß einem Qualitätsniveau umfasst, das anhand einer Schätzung eines Übertragungskanals definiert wird, der über eine Multiband-Übertragung in den wenigstens zwei Frequenzbändern hergestellt wird.

4. Verfahren nach Anspruch 3, wobei die Multiband-Übertragung unter Nutzung einer Modulation vom Typ BPSK und einer Wiederholung der übertragenen Bits durchgeführt wird.

5. Verfahren nach einem der vorhergehenden Ansprüche, wobei die wenigstens zwei Frequenzbänder aus der folgenden Gruppe gewählt werden: Frequenzband CENELEC A, Frequenzband CENELEC B, und Frequenzband FCC oder Frequenzband ARIB.

6. Verfahren nach einem der vorhergehenden Ansprüche, wobei die Information, gemäß welcher eine Kanalschätzung bei der zweiten Knotenvorrichtung (134) durch die erste Knotenvorrichtung (133) angefordert wird, ein *Tone Map Request-Indikator* eines Frame-Steuerungsheaders ist, der gemäß der Empfehlung ITU-T G9903 definiert ist, und die Informationen, die für wenigstens eine Kanalschätzung repräsentativ sind, die von der zweiten Knotenvorrichtung empfangen werden, in einer *Tone Map Response-Nachricht* enthalten sind, die gemäß der Empfehlung ITU- T G9903 definiert ist.

7. Knotenvorrichtung (133) zur Nutzung in einem Powerline-Kommunikationsnetzwerk (120), wobei die Knotenvorrichtung (133) dazu ausgebildet ist, mit einer zweiten Knotenvorrichtung (134) zu kommunizieren, die sich in ihrer Netzwerkumgebung (110) befindet, und in wenigstens zwei Frequenzbändern (B1, B2) zu kommunizieren, und wobei die zweite Knotenvorrichtung dazu ausgebildet ist, in wenigstens einem der wenigstens zwei Frequenzbänder zu kommunizieren, die Knotenvorrichtung (133) umfassend:
ein Übertragungsmodul, das dazu ausgebildet ist, zur zweiten Knotenvorrichtung in wenigstens zwei Frequenzbändern (B1, B2) ein Exemplar einer ersten Nachricht zu übertragen (S2, S3), die in jedem der wenigstens zwei Frequenzbänder (B1, B2) eine Information umfasst, gemäß welcher eine Kanalschätzung bei der zweiten Knotenvorrichtung (134) angefordert wird,
und wobei die Knotenvorrichtung (133) **dadurch gekennzeichnet ist, dass** sie ferner Folgendes umfasst:
- ein Übertragungsmodul zum Übertragen (S1), in einem erweiterten Frequenzband, dem "erweiterten Band" (EB), einer Nachricht, die einen Verweis auf das erweiterte Frequenzband umfasst, zur zweiten Knotenvorrichtung (134), wobei das erweiterte Frequenzband (EB) die wenigstens zwei Frequenzbänder (B1, B2) umfasst und die Nachricht eine Information umfasst, gemäß welcher eine Kanalschätzung des erweiterten Frequenzbands bei der zweiten Knotenvorrichtung durch die erste Knotenvorrichtung angefordert wird
- ein Modul zum Empfangen (S4, S12) wenigstens einer zweiten Nachricht, die von der zweiten Knotenvorrichtung auf jedem Frequenzband ausgesendet wird, über welches die zweite Knotenvorrichtung eine Nachricht empfangen hat, die eine Information umfasst, gemäß welcher eine Kanalschätzung angefordert wird, wobei jede zweite Nachricht Informationen umfasst, die für eine Kanalschätzung für das Frequenzband (B1, B2, EB) repräsentativ sind, über welches die zweite Nachricht empfangen wird,
- ein Abspeicherungsmodul, das dazu ausgebildet ist, in einem Speicher der Knotenvorrichtung die Information oder Informationen abzuspeichern (S5), die für wenigstens eine Kanalschätzung repräsentativ sind, die von der zweiten Knotenvorrichtung empfangen werden,
- eine Steuereinheit, die dazu ausgebildet ist, anhand der in dem Speicher abgespeicherten Informationen einen Modus zur Übertragung einer dritten Nachricht in einem der Frequenzbänder zu bestimmen, die zu einem späteren Zeitpunkt von der Knotenvorrichtung zur zweiten Knotenvorrichtung auszusenden ist.

8. Computerprogrammprodukt, **dadurch gekennzeichnet, dass** es Programmcode-Anweisungen umfasst, um die Schritte des Verfahrens nach einem der Ansprüche 1 bis 6 auszuführen, wenn das Programm von einem Prozessor ausgeführt wird.

9. Informationsspeichermedium umfassend ein Computerprogrammprodukt nach dem vorhergehenden Anspruch.

## Claims

1. Method for determining a mode of transmission in a frequency band between first and second node devices of a power line communication network (120), the first node device (133) being located in the network neighbourhood of the second node device (134) and vice versa, the first node device (133) being configured so as to communicate in at least two frequency bands (B1, B2), and the second node device (134) being configured so as to communicate in at least one of said at least two frequency bands, the method being executed by the first node device (133), the method comprising:
- transmitting (S2, S3) a copy of a first message (TM-RQ-B1, TM-RQ-B2) to the second node device in each of said at least two frequency bands, said first message comprising information according to which a channel estimate is requested from the second node device by said first node device,
and the method being **characterized in that** it furthermore comprises:
- transmitting (S1), on an extended frequency band (EB), a message (TM-RQ-EB) comprising a reference to said extended frequency band (EB) to the second node device (134), said extended frequency band (EB) comprising said at least two frequency bands (B1, B2), and said message comprising information according to which a channel estimate of said extended frequency band (EB) is requested from the second node device by said first node device,
- receiving (S4, S12) a second message transmitted by the second node device on each frequency band (B1, B2, EB) via which the second node device (134) has received a message comprising information according to which a channel estimate is requested, each second message comprising information representative of a channel estimate for the frequency band (B1, B2, EB) via which said second message is received,
- the first node device (133) recording (S5) the information, representative of the channel estimate, contained in each received second message, and
- determining, based on the recorded information, a transmission mode for transmitting, in one of the frequency bands, a third message to be transmitted subsequently from the first node device (133) to the second node device (134).

2. Method according to one of the preceding claims, wherein determining a transmission mode comprises a step of comparing first transmission quality indicators that are respectively determined, for each of the frequency bands, based on recorded information associated with each of the at least two frequency bands.

3. Method according to either of the preceding claims, wherein determining a transmission mode furthermore comprises selecting what is called a "robust" transmission mode according to a quality level defined based on an estimate of a transmission channel established via a multi-band transmission in said at least two frequency bands.

4. Method according to Claim 3, wherein the multi-band transmission is performed using BPSK modulation and repetition of the transmitted bits.

5. Method according to one of the preceding claims, wherein said at least two frequency bands are chosen from among the following group: CENELEC A frequency band, CENELEC B frequency band, and FCC frequency band or ARIB frequency band.

6. Method according to one of the preceding claims, wherein said information according to which a channel estimate is requested from the second node device (134) by said first node device (133) is a *Tone Map Request* indicator of a frame control header defined according to the ITU-T G9903 recommendation and the information representative of at least one channel estimate and received from the second node device is contained in a *Tone Map Response* message defined according to the ITU-T G9903 recommendation.

7. Node device (133) intended to be used in a power line communication network (120), said node device (133) being configured so as to communicate with a second node device (134) located in its network neighbourhood (110) and so as to communicate in at least two frequency bands (B 1, B2), and the second node device being configured so as to communicate in at least one of said at least two frequency bands, the node device (133) comprising:
- a transmission module configured so as to transmit (S2, S3), to the second node device, in at least two frequency bands (B 1, B2), a copy of a first message comprising, in each of the at least two frequency bands (B1, B2), information according to which a channel estimate is requested from the second node device (134),
and the node device (133) being **characterized in that** it furthermore comprises:
- a transmission module for transmitting (S1), in a frequency band called "extended band" (EB), a message comprising a reference to said extended frequency band to the second node device (134), said extended frequency band (EB) comprising said at least two frequency bands (B1, B2), and said message comprising information according to which a channel estimate of said extended frequency band is requested from the second node device by said first node device,
- a reception module for receiving (S4, S12) at least one second message, transmitted from the second node device on each frequency band via which the second node device has received a message comprising information according to which a channel estimate is requested, each second message comprising information representative of a channel estimate for the frequency band (B1, B2, EB) via which said second message is received,
- a recording module configured so as to record (S5), in a memory of said node device, the one or more items of information representative of at least one channel estimate, received from said second node device,
- a control unit configured so as to determine, based on the information recorded in said memory, a transmission mode for transmitting, in one of the frequency bands, a third message to be transmitted subsequently from said node device to the second node device.

8. Computer program product, **characterized in that** it comprises program code instructions for executing the steps of the method according to any one of Claims 1 to 6 when said program is executed by a processor.

9. Information storage medium comprising a computer program product according to the preceding claim.
